# EUROPEAN PATENT SPECIFICATION

(11) **EP 3 272 706 B1**
(45) Date of publication and mention of the grant of the patent: **07.12.2022**
(21) Application number: 16764594.4
(22) Date of filing: 10.02.2016
(51) Int. Cl.: C01B 13/11

(54) **OZONE GAS GENERATOR AND METHOD FOR MANUFACTURING OZONE GAS GENERATOR**
OZONGASGENERATOR UND VERFAHREN ZUR HERSTELLUNG EINES OZONGASGENERATORS
GÉNÉRATEUR D'OZONE GAZEUX ET PROCÉDÉ DE FABRICATION DE GÉNÉRATEUR D'OZONE GAZEUX

(30) Priority: 18.03.2015 JP 2015054243
(43) Date of publication of application: 24.01.2018
(73) Proprietor: Sumitomo Precision Products Co., Ltd., Amagasaki-shi, Hyogo 660-0891 (JP)
(72) Inventor: MATSUNO, Takashi, Amagasaki-shi Hyogo 660-0891 (JP)
(74) Representative: Viering, Jentschura & Partner mbB Patent- und Rechtsanwälte
(86) International application number: PCT/JP2016/053935
(87) International publication number: WO 2016/147763

(56) References cited:
- EP-A1- 2 484 632
- WO-A1-2011/039971
- JP-A- H1 160 207
- JP-A- 2005 320 223
- S.K.E. FORGHANY ET AL.: 'Reduction of the titanium niobium oxides. I. TiNb2O7 and Ti2Nb10O29' JOURNAL OF SOLID STATE CHEMISTRY vol. 40, no. 2, 15 November 1981, pages 136 - 142, XP024193404
- HUSSEIN ZNAD ET AL: "Ta/Ti-and Nb/Ti-Mixed Oxides as Efficient Solar Photocatalysts: Preparation, Characterization, and Photocatalytic Activity", INTERNATIONAL JOURNAL OF PHOTOENERGY, vol. 2012, 1 January 2012 (2012-01-01), pages 1-9, XP055662936, ISSN: 1110-662X, DOI: 10.1155/2012/548158
- SYLVIA SCHATTAUER ET AL: "Influence of sintering on the structural and electronic properties of TiO2 nanoporous layers prepared via a non-sol-gel approach", COLLOID & POLYMER SCIENCE, vol. 290, no. 18, 20 July 2012 (2012-07-20), pages 1843-1854, XP055664427, DE ISSN: 0303-402X, DOI: 10.1007/s00396-012-2708-9
- DARAMALLA V ET AL: "Temperature dependent dielectric properties and AC conductivity studies on titanium niobium oxide (TiNb2O7) thin films", JOURNAL OF THE EUROPEAN CERAMIC SOCIETY, ELSEVIER SCIENCE PUBLISHERS, BARKING, ESSEX, GB, vol. 40, no. 4, 20 November 2019 (2019-11-20), pages 1293-1300, XP085987870, ISSN: 0955-2219, DOI: 10.1016/J.JEURCERAMSOC.2019.11.032 [retrieved on 2019-11-20]

## Description

### Technical Field

The present invention relates to an ozone gas generator and a method for manufacturing an ozone gas generator.

### Background Art

In general, an ozone gas generator is known. Such an ozone gas generator is disclosed in International Publication No. WO2011/039971, for example.

The aforementioned International Publication No. WO2011/039971 discloses an ozone gas generator that generates ozone gas having a high concentration without adding another gas such as nitrogen gas to raw material gas. Specifically, the ozone gas generator according to the aforementioned International Publication No. WO2011/039971 includes a pair of dielectrics disposed at a predetermined interval to face each other, a pair of electrodes that is disposed outside the pair of dielectrics, respectively, and generates a discharge between the pair of dielectrics, and a functional film provided on at least one of surfaces of the pair of the dielectrics that face each other. The functional film of this ozone gas generator contains a first metal oxide of one or two metals selected from niobium, tantalum, molybdenum, and chromium and a second metal oxide of one or two metals selected from titanium, tungsten, zinc, and iron.

### Prior Art

### Patent Document

Patent Document 1: International Publication No. WO2011/039971

### Summary of the Invention

### Problem to be Solved by the Invention

In the conventional ozone gas generator according to the aforementioned International Publication No. WO2011/039971, ozone generation performance may vary due to a difference in the structure of the metal oxide of a surface of the functional film. Thus, an ozone gas generator capable of more stably generating ozone gas having a high concentration without adding another gas such as nitrogen gas to raw material gas is desired.

The present invention has been proposed in order to solve the aforementioned problem, and one object of the present invention is to provide an ozone gas generator capable of more stably generating ozone gas having a high concentration without adding another gas such as nitrogen gas to raw material gas and a method for manufacturing the ozone gas generator.

### Means for Solving the Problem

As a result of earnest investigations to solve the aforementioned problem, the inventor of this application has found that a functional film provided on at least one of surfaces of a pair of dielectrics that face each other contains a crystalline compound of a titanium oxide and a niobium oxide such that ozone gas having a high concentration can be more stably generated without adding another gas such as nitrogen gas to raw material gas. That is, an ozone gas generator according to a first aspect of the present invention includes a pair of electrodes disposed at a predetermined interval to face each other, a pair of dielectrics provided on surfaces of the pair of electrodes that face each other, respectively, and a functional film provided on at least one of surfaces of the pair of dielectrics that face each other, and the functional film contains a crystalline compound of a titanium oxide and a niobium oxide, wherein the crystalline compound of the titanium oxide and the niobium oxide of the functional film contains at least one of TiNb₂O₇ and Ti₂Nb₁₀O₂₉.

In the ozone gas generator according to the first aspect of the present invention, as hereinabove described, the functional film contains the crystalline compound of the titanium oxide and the niobium oxide such that when ozone gas is generated without adding another gas such as nitrogen gas to raw material gas, ozone generation performance can be suppressed from varying. Accordingly, ozone gas having a high concentration can be more stably generated without adding another gas such as nitrogen gas to raw material gas.

In the aforementioned ozone gas generator according to the first aspect, the crystalline compound of the titanium oxide and the niobium oxide of the functional film is preferably produced from a titanium oxide and a niobium oxide in which a molar number of Nb₂O₅ is at least 0.1 times and not more than 6 times a molar number of TiO₂. According to this structure, the crystalline compound such as TiNb₂O₇ or Ti₂Nb₁₀O₂₉ can be produced from the titanium oxide and the niobium oxide in which the molar number of Nb₂O₅ is at least 0.1 times and not more than 6 times the molar number of TiO₂.

In the aforementioned ozone gas generator according to the first aspect, the functional film preferably further contains a solid solution of a titanium oxide. According to this structure, ozone gas having a high concentration can be more stably generated by the action of both the crystalline compound of the titanium oxide and the niobium oxide and the solid solution of the titanium oxide.

In the aforementioned ozone gas generator according to the first aspect, the crystalline compound of the titanium oxide and the niobium oxide of the functional film contains at least one of TiNb₂O₇ and Ti₂Nb₁₀O₂₉. According to this structure, ozone gas having a high concentration can be more stably generated by the action of the crystalline compound that contains at least one of TiNb₂O₇ and Ti₂Nb₁₀O₂₉.

A method for manufacturing an ozone gas generator according to a second aspect of the present invention includes producing a crystalline compound of a titanium oxide and a niobium oxide by heating the titanium oxide and the niobium oxide at 1000°C or more, providing a pair of electrodes disposed at a predetermined interval to face each other, providing a pair of dielectrics on surfaces of the pair of electrodes that face each other, respectively, and providing a functional film that contains the crystalline compound of the titanium oxide and the niobium oxide on at least one of surfaces of the pair of dielectrics that face each other, wherein the crystalline compound of the titanium oxide and the niobium oxide of the functional film contains at least one of TiNb₂O₇ and Ti₂Nb₁₀O₂₉.

The method for manufacturing an ozone gas generator according to the second aspect of the present invention is constituted as described above such that the ozone gas generator capable of suppressing ozone generation performance from varying when generating ozone gas without adding another gas such as nitrogen gas to raw material gas can be manufactured. Accordingly, the ozone gas generator capable of more stably generating ozone gas having a high concentration without adding another gas such as nitrogen gas to raw material gas can be manufactured.

In the aforementioned method for manufacturing an ozone gas generator according to the second aspect, the producing of the crystalline compound of the titanium oxide and the niobium oxide preferably includes mixing the titanium oxide and the niobium oxide, producing the crystalline compound by heating the mixed titanium oxide and niobium oxide at 1000°C or more, and milling the produced compound. According to this structure, the functional film of the ozone gas generator can be easily produced by easily producing the crystalline compound of the titanium oxide and the niobium oxide from the titanium oxide and the niobium oxide.

In the aforementioned method for manufacturing an ozone gas generator according to the second aspect, the providing of the functional film preferably includes applying the produced crystalline compound of the titanium oxide and the niobium oxide and a solid solution of a titanium oxide to the dielectrics. According to this structure, the ozone gas generator capable of more stably generating ozone gas having a high concentration by the action of both the crystalline compound of the titanium oxide and the niobium oxide and the solid solution of the titanium oxide can be manufactured.

### Effect of the Invention

According to the present invention, as hereinabove described, ozone gas having a high concentration can be more stably generated without adding another gas such as nitrogen gas to raw material gas.

### Brief Description of the Drawings

[Fig. 1] A block diagram showing an ozone gas generator according to an embodiment of the present invention.
[Fig. 2] A schematic view showing a discharge cell of the ozone gas generator according to the embodiment of the present invention.
[Fig. 3] A view showing a state diagram of TiO₂-Nb₂O₅.
[Fig. 4] A diagram showing a process of manufacturing an ozone gas generating portion of the ozone gas generator according to the embodiment of the present invention.
[Fig. 5] A table for illustrating generation of ozone gas according to Examples.

### Modes for Carrying Out the Invention

An embodiment of the present invention is hereinafter described on the basis of the drawings.

### (Structure of Ozone Gas Generator)

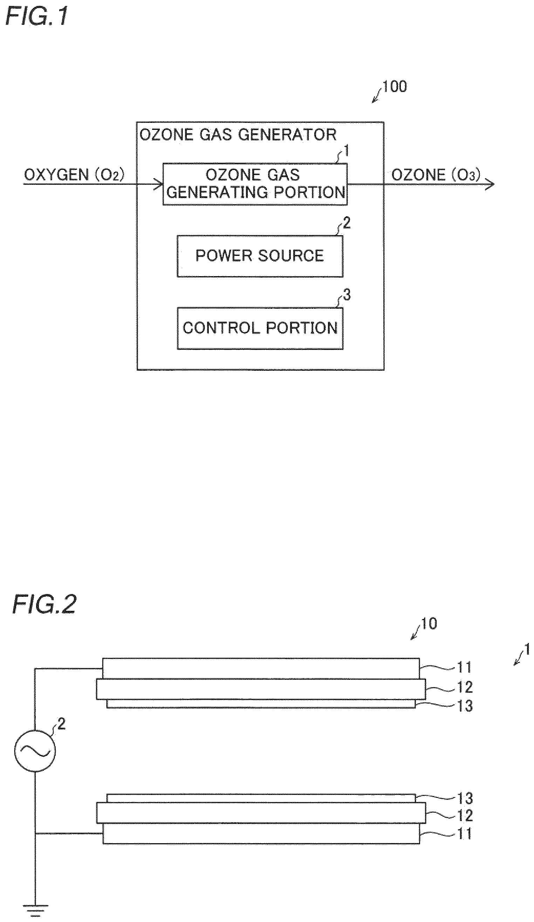

The structure of an ozone gas generator 100 according to the embodiment of the present invention is now described with reference to Fig. 1.

The ozone gas generator 100 according to the embodiment of the present invention is configured to generate ozone to be used in a semiconductor manufacturing process. That is, the ozone gas generator 100 is configured to suppress the concentration of impurities (substances other than ozone and oxygen) in ozone gas to be generated, using oxygen gas having a high purity (oxygen concentration of 99.9% or higher, for example). As shown in Fig. 1, the ozone gas generator 100 includes an ozone gas generating portion 1, a power source 2, and a control portion 3.

Oxygen gas (O₂) having a high purity is supplied as a raw material to the ozone gas generating portion 1, and the ozone gas generating portion 1 is configured to generate ozone gas (O₃) having a high concentration. Incidentally, another gas such as nitrogen is not added to the oxygen gas having a high purity as a raw material.

The ozone gas generating portion 1 includes a discharge cell 10. As shown in Fig. 2, the discharge cell 10 includes a pair of electrodes 11, a pair of dielectrics 12, and a pair of functional films 13. Incidentally, the ozone gas generating portion 1 is provided with a plurality of discharge cells 10 although not shown. The plurality of discharge cells 10 has the same structure. The discharge cell 10 is configured to perform silent discharge due to application by the power source 2. Between the plurality of discharge cells 10, a flow path through which cooling water passes is provided.

The pair of electrodes 11 is disposed outside the pair of the dielectrics 12, respectively, and is configured to generate a discharge between the pair of dielectrics 12. The pair of electrodes 11 is connected with the power source 2. Electric power having a high frequency and a high voltage is supplied from the power source 2 to the pair of electrodes 11. The pair of electrodes 11 each is formed in a film shape. Furthermore, the pair of electrodes 11 is disposed to face each other.

The pair of dielectrics 12 is disposed at a predetermined interval to face each other. The pair of dielectrics 12 is made of alumina (ceramic). The pair of dielectrics 12 each is formed in a plate shape. Furthermore, the pair of dielectrics 12 has a larger area than the electrodes 11, respectively, and is disposed to cover the inner surfaces (surfaces that face each other) of the pair of electrodes 11. The dielectrics 12 each have a thickness of about 0.05 mm or more and about 1 mm or less, for example. In order to obtain stable performance, the dielectrics 12 each preferably have a thickness of about 0.1 mm or more and about 0.3 mm or less. The pair of dielectrics 12 is disposed at an interval of about 30 µm or more and about 100 µm or less, for example. Furthermore, the oxygen gas as the raw material is supplied to a gap between the pair of dielectrics 12.

According to this embodiment, the pair of functional films 13 is provided on surfaces of the pair of dielectrics 12 that face each other. That is, the functional films 13 are disposed in contact with the gap (a space in which a discharge is generated) between the pair of dielectrics 12. The dielectrics 12 each contain a crystalline compound of a titanium oxide and a niobium oxide. Specifically, the crystalline compound of the titanium oxide and the niobium oxide of the functional films 13 contains at least one of TiNb₂O₇ (a crystalline compound of TiO₂:Nb₂O₅ = 1:1) and Ti₂Nb₁₀O₂₉ (a crystalline compound of TiO₂:Nb₂O₅ = 2:5). That is, the crystalline compound of the titanium oxide and the niobium oxide of the functional films 13 is produced from a titanium oxide and a niobium oxide in which the molar number of Nb₂O₅ is at least about 0.1 times and not more than about 6 times the molar number of TiO₂. The crystalline compound of the titanium oxide and the niobium oxide of the functional films 13 is preferably produced from a titanium oxide and a niobium oxide in which the molar number of Nb₂O₅ is more than about 1 time and less than about 2.5 times the molar number of TiO₂. The functional films 13 each further contain a solid solution of a titanium oxide.

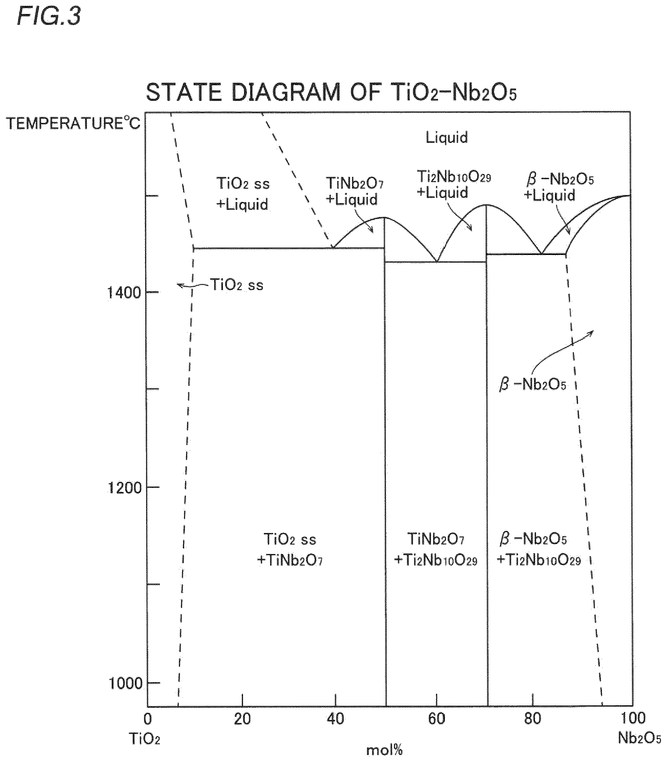

As shown in a state diagram of TiO₂-Nb₂O₅ of Fig. 3, in the case of a mixture, in which the mol% of Nb₂O₅ is about 9% or more and about 85.7% or less (in which the molar number of Nb₂O₅ is at least about 0.1 times and not more than about 6 times the molar number of TiO₂), of mixtures of TiO₂ and Nb₂O₅, at least one of TiNb₂O₇ and Ti₂Nb₁₀O₂₉ is produced by sintering (heating) . Specifically, when the mol% of Nb₂O₅ is not less than about 9% and less than about 50%, a solid solution of TiNb₂O₇ and TiO₂ is produced. When the mol% of Nb₂O₅ is about 50% (when TiO₂:Nb₂O₅ = 1:1), TiNb₂O₇ is produced. When the mol% of Nb₂O₅ is more than about 50% and less than about 71.9%, TiNb₂O₇ and Ti₂Nb₁₀O₂₉ are produced. When the mol% of Nb₂O₅ is about 71.9% (when TiO₂:Nb₂O₅ = 2:5), Ti₂Nb₁₀O₂₉ is produced. When the mol% of Nb₂O₅ is more than about 71.9% and not more than about 85.7%, Ti₂Nb₁₀O₂₉ and β-Nb₂O₅ are produced.

That is, the crystalline compound is produced from the titanium oxide and the niobium oxide in which the molar number of Nb₂O₅ is more than about 1 time and less than about 2.5 times the molar number of TiO₂ (the mixture, in which the mol% of Nb₂O₅ is more than about 50% and less than about 71.4%, of the mixtures of TiO₂ and Nb₂O₅) such that both TiNb₂O₇ and Ti₂Nb₁₀O₂₉ are produced.

The power source 2 is configured to supply alternating current power to the pair of electrodes 11 of the ozone gas generating portion 1. The power source 2 is configured to supply electric power having a high frequency resonated by an LC circuit or the like.

The control portion 3 is configured to control each portion of the ozone gas generator 100. For example, the control portion 3 controls the power source 2 to control electric power to be supplied to the ozone gas generating portion 1.

### (Method for Manufacturing Ozone Gas Generator)

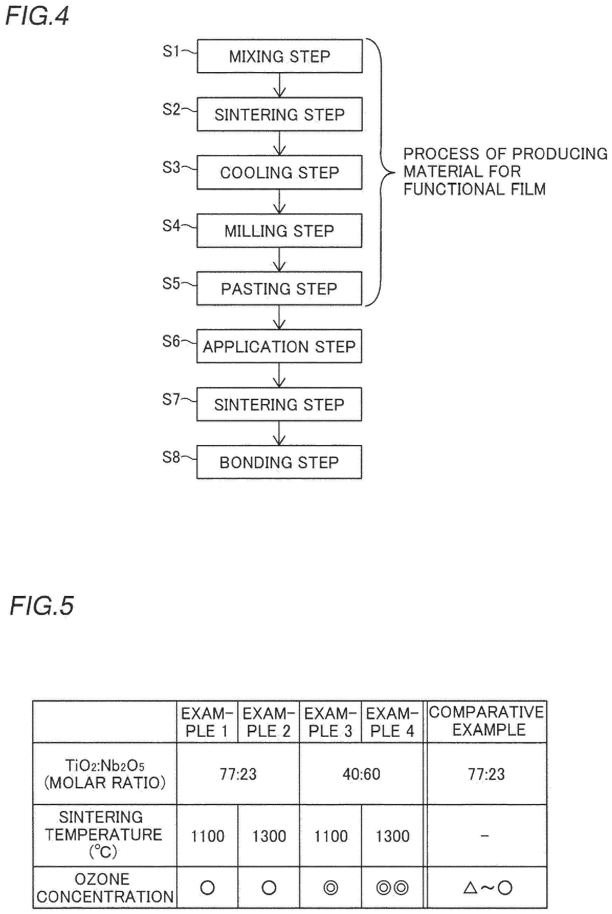

A method for manufacturing the ozone gas generator 100 (ozone gas generating portion 1) is now described with reference to Fig. 4.

In a mixing step at a step S1 in Fig. 4, a titanium oxide (TiO₂) and a niobium oxide (Nb₂O₅) at a predetermined ratio are mixed. Specifically, particulate TiO₂ and Nb₂O₅, a binder such as ethanol, and zirconia balls for mixing and milling are mixed in a mill.

In a sintering step at a step S2, the mixed titanium oxide (TiO₂) and niobium oxide (Nb₂O₅) are sintered (heated). Specifically, the mixture of the particulate TiO₂ and Nb₂O₅ is sintered at a temperature of 1000°C or more in a furnace. The particulate TiO₂ and Nb₂O₅ are sintered at atmospheric pressure. In addition, the particulate TiO₂ and Nb₂O₅ are sintered at a temperature that is at least 1000°C and not more than a temperature at which the particulate TiO₂ and Nb₂O₅ are not melted (about 1400°C, for example). The particulate TiO₂ and Nb₂O₅ are preferably sintered at a temperature that is at least 1300°C and not more than a temperature at which the particulate TiO₂ and Nb₂O₅ are not melted (about 1400°C, for example). Thus, the crystalline compound of the titanium oxide and the niobium oxide (at least one of TiNb₂O₇ and Ti₂Nb₁₀O₂₉) is produced.

In a cooling step at a step S3, the sintered crystalline compound of the titanium oxide and the niobium oxide is cooled. In a milling step at a step S4, the cooled crystalline compound of the titanium oxide and the niobium oxide is milled. Specifically, the crystalline compound of the titanium oxide and the niobium oxide, a binder such as ethanol, and zirconia balls for mixing and milling are milled in the mill. The crystalline compound of the titanium oxide and the niobium oxide is milled until its particle size reaches not larger than a particle size that can pass through a mesh for screen printing to be used in a subsequent application step. For example, the crystalline compound of the titanium oxide and the niobium oxide is milled until its particle size reaches 1000 nm or less.

In a pasting step at a step S5, the crystalline compound of the titanium oxide and the niobium oxide, a solid solution (ss) of a titanium oxide (TiO₂), and glass and oil are mixed to be pasted. The paste that contains the crystalline compound of the titanium oxide and the niobium oxide is adjusted to a viscosity that allows screen printing in the subsequent application step. Specifically, the amount of oil to be mixed is adjusted to adjust the viscosity of the paste. Accordingly, a material for the functional films 13 is produced.

In the application step at a step S6, the pasted material for the functional films 13 that contains the crystalline compound of the titanium oxide and the niobium oxide and the solid solution of the titanium oxide is applied to the dielectrics 12 by screen printing. The functional films 13 are applied at a thickness of about 10 µm, for example.

In a sintering step at a step S7, the applied paste is sintered (heated) to fix the functional films 13 to the dielectrics 12. Specifically, at a temperature at which the glass in the paste is melted (about 850°C, for example), sintering is performed for a predetermined time. Thereafter, the applied paste is cooled, and the functional films 13 are fixed onto the dielectrics 12.

In a bonding step at a step S8, the pair of dielectrics 12 formed with the functional films 13, respectively, is bonded at a predetermined interval. Furthermore, the pair of electrodes 11 that generates a discharge between the pair of the dielectrics 12 is provided outside the pair of the dielectrics 12, respectively. Specifically, ribs for gap formation are disposed on first surfaces of the dielectrics 12 (alumina substrates) on sides on which the functional films 13 are provided. Furthermore, the electrodes 11 are provided on second surfaces of the dielectric 12 on sides opposite to the functional films 12. The first surfaces (surfaces on the functional film 12 sides) of the dielectrics 12 are bonded to each other by a bonding member through the ribs. In addition, the second surfaces (surfaces of the electrode 11 sides) of the adjacent dielectrics 12 constituting the discharge cells 10 adjacent to each other are bonded to each other by a bonding member through an insulator. The bonding member includes glass, for example. In the bonding step, sintering (heating) is performed for a predetermined time at a temperature at which the glass is melted (about 850°C, for example). Thereafter, the glass is cooled, and multiple pairs of dielectrics 12 are bonded. Thus, the plurality of discharge cells 10 is assembled. In addition, the flow path through which cooling water passes is provided between the plurality of discharge cells 10, and the ozone gas generating portion 1 is assembled.

### (Effects of Embodiment)

According to this embodiment, the following effects can be obtained.

According to this embodiment, as hereinabove described, the functional films 13 contain the crystalline compound of the titanium oxide and the niobium oxide such that when ozone gas is generated without adding another gas such as nitrogen gas to raw material gas, ozone generation performance can be suppressed from varying. Accordingly, ozone gas having a high concentration can be more stably generated without adding another gas such as nitrogen gas to raw material gas.

According to this embodiment, as hereinabove described, the crystalline compound of the titanium oxide and the niobium oxide of the functional films 13 is produced from the titanium oxide and the niobium oxide in which the molar number of Nb₂O₅ is at least about 0.1 times and not more than about 6 times the molar number of TiO₂. Accordingly, the crystalline compound such as TiNb₂O₇ or Ti₂Nb₁₀O₂₉ can be produced from the titanium oxide and the niobium oxide in which the molar number of Nb₂O₅ is at least about 0.1 times and not more than about 6 times the molar number of TiO₂.

According to this embodiment, as hereinabove described, the functional films 13 contain the solid solution of the titanium oxide. Accordingly, ozone gas having a high concentration can be more stably generated by the action of both the crystalline compound of the titanium oxide and the niobium oxide and the solid solution of the titanium oxide.

According to this embodiment, as hereinabove described, the crystalline compound of the titanium oxide and the niobium oxide of the functional films 13 contains at least one of TiNb₂O₇ and Ti₂Nb₁₀O₂₉. Accordingly, ozone gas having a high concentration can be more stably generated by the action of the crystalline compound that contains at least one of TiNb₂O₇ and Ti₂Nb₁₀O₂₉.

### (Description of Examples)

Results of an experiment conducted in order to evaluate the functional films 13 of the ozone gas generator 100 according to this embodiment is now described with reference to Fig. 5.

In Examples, the experiment in the case where as the material for the functional films 13, a crystalline compound was produced with a titanium oxide and a niobium oxide of TiO₂:Nb₂O₅ = 77:23 on a molar ratio basis (Examples 1 and 2) and the experiment in the case where as the material for the functional films 13, a crystalline compound was produced with a titanium oxide and a niobium oxide of TiO₂:Nb₂O₅ = 40:60 on a molar ratio basis (Examples 3 and 4) were conducted. Furthermore, each of the titanium oxide and the niobium oxide was sintered (heated) at a temperature of 1100°C (Examples 1 and 3) or 1300°C (Examples 2 and 4) to generate the crystalline compound.

In the case of Example 1 where the titanium oxide and the niobium oxide of TiO₂:Nb₂O₅ = 77:23 on a molar ratio basis were sintered at a temperature of 1100°C, ozone having a high concentration could be stably generated. In the case of Example 2 where the titanium oxide and the niobium oxide of TiO₂:Nb₂O₅ = 77:23 on a molar ratio basis were sintered at a temperature of 1300°C, ozone having a high concentration could be stably generated. In each of Examples 1 and 2, when surfaces of the functional films 13 that contain the crystalline compound produced with the titanium oxide and the niobium oxide of TiO₂:Nb₂O₅ = 77:23 were measured by X-ray diffraction, a peak of TiNb₂O₇ was detected.

In the case of Example 3 where the titanium oxide and the niobium oxide of TiO₂:Nb₂O₅ = 40:60 on a molar ratio basis were sintered at a temperature of 1100°C, ozone having a higher concentration than in the case where TiO₂:Nb₂O₅ = 77:23 (Examples 1 and 2) could be stably generated. In the case of Example 4 where the titanium oxide and the niobium oxide of TiO₂:Nb₂O₅ = 40:60 on a molar ratio basis were sintered at a temperature of 1300°C, ozone having a still higher concentration than in the case of Example 3 where the titanium oxide and the niobium oxide of TiO₂:Nb₂O₅ = 40:60 were sintered at a temperature of 1100°C could be stably generated. In each of Examples 3 and 4, when the surfaces of the functional films 13 that contain the crystalline compound produced with the titanium oxide and the niobium oxide of TiO₂:Nb₂O₅ = 40:60 were measured by X-ray diffraction, peaks of TiNb₂O₇ and Ti₂Nb₁₀O₂₉ were detected.

In Comparative Example, the experiment in the case where as the material for the functional films, the titanium oxide and the niobium oxide of TiO₂:Nb₂O₅ = 77:23 were not sintered (heated) but were applied was conducted. In this Comparative Example, there were functional films that generate ozone having a relatively high concentration was generated and functional films that generate ozone having a relatively low concentration. That is, in the functional films according to Comparative Example, ozone generation performance varied.

### (Modifications)

The embodiments and Examples disclosed this time must be considered as illustrative in all points and not restrictive. The range of the present invention is shown not by the above description of the embodiments and Examples but by the scope of claims for patent.

For example, while the example in which the functional films are provided on both of the pair of dielectrics has been shown in the aforementioned embodiment, the present invention is not restricted to this. According to the present invention, it is only required to provide the functional film on at least one of the pair of dielectrics.

While the example in which the ozone gas generator is configured to generate ozone by silent discharge has been shown in the aforementioned embodiment, the present invention is not restricted to this. According to the present invention, the ozone gas generator may generate ozone gas by discharge other than silent discharge. The ozone gas generator may be configured to generate ozone gas by creeping discharge, for example.

While the example in which the material for the functional films is applied to the dielectrics by screen printing to produce the functional films has been shown in the aforementioned embodiment, the present invention is not restricted to this. According to the present invention, the functional films may be produced on the dielectrics by sputtering. Alternatively, the material for the functional films may be applied to the dielectrics by a method other than screen printing to produce the functional films.

While the example in which the dielectrics are made of alumina has been shown in the aforementioned embodiment, the present invention is not restricted to this. According to the present invention, the dielectrics may be made of ceramic other than alumina or may be made of a material other than ceramic.

While the example in which the plurality of discharge cells are provided in the ozone gas generator has been shown in the aforementioned embodiment, the present invention is not restricted to this. According to the present invention, one discharge cell may be provided in the ozone gas generator.

The ozone gas generator according to the present invention may be incorporated into an apparatus such as an ozone water producing apparatus and used.

### Description of Reference Numerals

11: electrode
12: dielectric
13: functional film
100: ozone gas generator

## Claims

1. An ozone gas generator comprising:
a pair of electrodes disposed at a predetermined interval to face each other;
a pair of dielectrics provided on surfaces of the pair of electrodes that face each other, respectively; and
a functional film provided on at least one of surfaces of the pair of dielectrics that face each other, wherein
the functional film contains a crystalline compound of a titanium oxide and a niobium oxide,
wherein the crystalline compound of the titanium oxide and the niobium oxide of the functional film contains at least one of TiNb₂O₇ and Ti₂Nb₁₀O₂₉.

2. The ozone gas generator according to claim 1, wherein
the crystalline compound of the titanium oxide and the niobium oxide of the functional film is produced from a titanium oxide and a niobium oxide in which a molar number of Nb₂O₅ is at least 0.1 times and not more than 6 times a molar number of TiO₂.

3. The ozone gas generator according to claim 1 or 2, wherein
the functional film further contains a solid solution of a titanium oxide.

4. A method for manufacturing an ozone gas generator, comprising:
producing a crystalline compound of a titanium oxide and a niobium oxide by heating the titanium oxide and the niobium oxide at 1000°C or more;
providing a pair of electrodes disposed at a predetermined interval to face each other;
providing a pair of dielectrics on surfaces of the pair of electrodes that face each other, respectively; and
providing a functional film that contains the crystalline compound of the titanium oxide and the niobium oxide on at least one of surfaces of the pair of dielectrics that face each other,
wherein the crystalline compound of the titanium oxide and the niobium oxide of the functional film contains at least one of TiNb₂O₇ and Ti₂Nb₁₀O₂₉.

5. The method for manufacturing an ozone gas generator according to claim 4, wherein
the producing of the crystalline compound of the titanium oxide and the niobium oxide includes mixing the titanium oxide and the niobium oxide, producing the crystalline compound by heating the mixed titanium oxide and niobium oxide at 1000°C or more, and milling the produced compound.

6. The method for manufacturing an ozone gas generator according to claim 4 or 5, wherein
the providing of the functional film includes applying the produced crystalline compound of the titanium oxide and the niobium oxide and a solid solution of a titanium oxide to the dielectrics.

## Patentansprüche

1. Ozongaserzeugungsvorrichtung, aufweisend:
ein Paar von Elektroden, welche in einem vorbestimmten Abstand angeordnet sind, um einander zugewandt zu sein,
ein Paar von Dielektrika, welche an Flächen des Paares von Elektroden, welche einander zugewandt sind, in jeweils zugeordneter Weise bereitgestellt sind, und
einen funktionellen Film, welcher an mindestens einer von den Flächen des Paares von Dielektrika, welche einander zugewandt sind, bereitgestellt ist, wobei
der funktionelle Film eine kristalline Verbindung von einem Titanoxid und einem Nioboxid enthält,
wobei die kristalline Verbindung von dem Titanoxid und dem Nioboxid des funktionellen Films mindestens eines von TiNb₂O₇ und Ti₂Nb₁₀O₂₉ enthält.

2. Ozongaserzeugungsvorrichtung gemäß Anspruch 1, wobei:
die kristalline Verbindung von dem Titanoxid und dem Nioboxid des funktionellen Films aus einem Titanoxid und einem Nioboxid hergestellt ist, bei welchem die Molzahl von Nb₂O₅ mindestens das 0,1-fache und höchstens das 6-fache der Molzahl von TiO₂ beträgt.

3. Ozongaserzeugungsvorrichtung gemäß Anspruch 1 oder 2, wobei:
der funktionelle Film ferner eine feste Lösung eines Titanoxids enthält.

4. Verfahren zum Herstellen einer Ozongaserzeugungsvorrichtung, aufweisend:
Herstellen einer kristallinen Verbindung von einem Titanoxid und einem Nioboxid mittels Erhitzens des Titanoxids und des Nioboxids auf 1000°C oder mehr,
Bereitstellen eines Paares von Elektroden, welche in einem vorbestimmten Abstand angeordnet sind, um einander zugewandt zu sein,
Bereitstellen eines Paares von Dielektrika in jeweils zugeordneter Weise an Flächen des Paares von Elektroden, welche einander zugewandt sind, und
Bereitstellen eines funktionellen Films, welcher die kristalline Verbindung von dem Titanoxid und dem Nioboxid enthält, an mindestens einer der Flächen des Paares von Dielektrika, welche einander zugewandt sind,
wobei die kristalline Verbindung von dem Titanoxid und dem Nioboxid des funktionellen Films mindestens eines von TiNb₂O₇ und Ti₂Nb₁₀O₂₉ enthält.

5. Verfahren zum Herstellen einer Ozongaserzeugungsvorrichtung gemäß Anspruch 4, wobei:
das Herstellen der kristallinen Verbindung von dem Titanoxid und dem Nioboxid aufweist: das Mischen des Titanoxids und des Nioboxids, das Herstellen der kristallinen Verbindung mittels Erhitzens des gemischten Titanoxids und Nioboxids auf 1000°C oder mehr, und das Mahlen der hergestellten Verbindung.

6. Verfahren zum Herstellen einer Ozongaserzeugungsvorrichtung gemäß Anspruch 4 oder 5, wobei:
das Bereitstellen des funktionellen Films aufweist: das Aufbringen der hergestellten kristallinen Verbindung von dem Titanoxid und dem Nioboxid und einer festen Lösung eines Titanoxids an den Dielektrika.

## Revendications

1. Générateur de gaz d'ozone, comprenant :
une paire d'électrodes disposées à un intervalle prédéterminé pour se faire face l'une à l'autre ;
une paire de diélectriques prévus sur des surfaces de la paire d'électrodes qui se font face, respectivement ; et
un film fonctionnel prévu sur au moins une de surfaces de la paire de diélectriques qui se font face, dans lequel
le film fonctionnel contient un composé cristallin d'un oxyde de titane et d'un oxyde de niobium,
dans lequel le composé cristallin de l'oxyde de titane et de l'oxyde de niobium du film fonctionnel contient au moins un parmi TiNb₂O₇ et Ti₂Nb₁₀O₂₉.

2. Générateur de gaz d'ozone selon la revendication 1, dans lequel
le composé cristallin de l'oxyde de titane et de l'oxyde de niobium du film fonctionnel est produit à partir d'un oxyde de titane et d'un oxyde de niobium où un nombre molaire de Nb₂O₅ est au moins 0,1 fois et pas plus de 6 fois un nombre molaire de TiO₂.

3. Générateur de gaz d'ozone selon la revendication 1 ou 2, dans lequel
le film fonctionnel contient en outre une solution solide d'un oxyde de titane.

4. Procédé de fabrication d'un générateur de gaz d'ozone, comprenant :
la production d'un composé cristallin d'un oxyde de titane et d'un oxyde de niobium en chauffant l'oxyde de titane et l'oxyde de niobium à 1000 °C ou plus ;
la fourniture d'une paire d'électrodes disposées à un intervalle prédéterminé pour se faire face l'une à l'autre ;
la fourniture d'une paire de diélectriques sur des surfaces de la paire d'électrodes qui se font face, respectivement ; et
la fourniture d'un film fonctionnel qui contient le composé cristallin de l'oxyde de titane et de l'oxyde de niobium sur au moins une de surfaces de la paire de diélectriques qui se font face,
dans lequel le composé cristallin de l'oxyde de titane et de l'oxyde de niobium du film fonctionnel contient au moins un parmi TiNb₂O₇ et Ti₂Nb₁₀O₂₉.

5. Procédé de fabrication d'un générateur de gaz d'ozone selon la revendication 4, dans lequel
la production du composé cristallin de l'oxyde de titane et de l'oxyde de niobium comprend le mélange de l'oxyde de titane et de l'oxyde de niobium, la production du composé cristallin en chauffant l'oxyde de titane et l'oxyde de niobium mélangés à 1000 °C ou plus, et le broyage du composé produit.

6. Procédé de fabrication d'un générateur de gaz d'ozone selon la revendication 4 ou 5, dans lequel
la fourniture du film fonctionnel comprend l'application du composé cristallin produit de l'oxyde de titane et de l'oxyde de niobium et d'une solution solide d'un oxyde de titane sur les diélectriques.
